Europäisches Patentamt

European Patent Office

Office européen des brevets

(19)

(11) Veröffentlichungsnummer: **0 000 492**
**B1**

(12)     EUROPÄISCHE PATENTSCHRIFT

(45) Veröffentlichungstag der Patentschrift: 30.06.82

(51) Int. Cl.³: **C 08 G  69/26**

(21) Anmeldenummer: **78100353.8**

(22) Anmeldetag: **11.07.78**

(54) Transparente Polyamide und deren Verwendung zur Herstellung von Formkörpern.

(30) Priorität: **21.07.77 DE 2732928**

(43) Veröffentlichungstag der Anmeldung:
**07.02.79 Patentblatt 79/3**

(45) Bekanntmachung des Hinweises auf die Patenterteilung:
**30.06.82 Patentblatt 82/26**

(84) Benannte Vertragsstaaten:
**DE FR GB**

(56) Entgegenhaltungen:
**DE - A - 2 217 016**
**FR - A - 2 012 193**
**GB - A - 760 025**
**US - A - 3 840 501**
**US - A - 3 842 045**
**US - A - 4 028 476**

Die Akte enthält technische Angaben die nach dem
Eingang der Anmeldung eingereicht wurden und
die nicht in dieser Patentschrift enthalten sind.

(73) Patentinhaber: **BAYER AG**
**Zentralbereich Patente, Marken und Lizenzen**
**D-5090 Leverkusen 1, Bayerwerk (DE)**

(72) Erfinder: **Meyer, Rolf-Volker, Dr.**
**Bodelschwinghstrasse 12**
**D-4150 Krefeld (DE)**
Erfinder: **Dhein, Rolf, Dr.**
**Deswatinesstrasse 30**
**D-4150 Krefeld (DE)**
Erfinder: **Fahnler, Friedrich**
**Wimmersweg 60**
**D-4150 Krefeld (DE)**

Courier Press, Leamington Spa, England.

# 0 000 492

Transparente Polyamide und deren Verwendung zur Herstellung von Formkörpern

Vorliegende Erfindung betrifft transparente, thermoplastisch verformbare Copolyamide mit hoher Wärmeformbeständigkeit.

Insbesondere bezieht sich die Erfindung auf Polyamide, die durch Polykondensation von Bis-(4-aminocyclohexyl)-methan und gegebenenfalls geringeren Mengen aliphatischer und/oder weiterer cycloaliphatischer Diamine als Diaminkomponente mit Azelainsäure sowie Isophthalsäure oder Adipinsäure als Dicarbonsäurekomponente unter Verwendung üblicher Verfahrensweisen hergestellt werden.

Für viele Einsatzgebiete ist die von den üblichen Polyamiden wie 6-Polyamid oder 6,6-Polyamid bekannte günstige Eigenschaftskombination gegenüber anderen thermoplastisch verarbeitbaren Materialien von großem Vorteil. Wegen der Teilkristallinität dieser Polyamid-Typen, die einen großen Teil der besonders guten Eigenschaften verursacht, sind jedoch Formteile aus diesen Polyamiden immer opak und daher in allen Fällen, in denen transparente Formteile gefordert werden, nicht verwendbar.

Es hat daher nicht an Versuchen gefehlt, Polyamide herzustellen, die neben ihrem amorphen Charakter und der hiermit verbundenen Transparenz auch noch die günstigen Eigenschaften von Polyamid-6 oder -6,6 aufweisen.

Einer dieser Versuche ist der Einsatz von Bis-(4-amino-cyclohexyl)-methan bei der Herstellung von Polyamiden. So sind transparente Polyamide aus dem genannten Amin und aromatischen Dicarbonsäuren wie Isophthalsäure (US—A 2 696 482) oder Terephthalsäure (US—A 2 516 585) bekannt. Diese Produkte sind jedoch wegen ihrer hohen Schmelzviskosität thermoplastisch nur schwierig verarbeitbar.

Es wurde auch versucht, transparente Polyamide aus Bis-(4-aminocyclohexyl)-methan und wieteren polyamidbildenden Komponenten wie Adipinsäure, Hexamethylendiamin und ε-Caprolactam herzustellen. Diese Polyamide sind jedoch äußerst unbeständig gegen Lösungsmittel und bilden unter Eintrübung Sphärolithe.

Die in der DE—A 1 595 354 beschriebenen Polyamide auf Basis von Bis-(4-aminocyclohexyl)-propan und Adipinsäure neigen zwar weniger zur Kristallisation, die thermoplastische Verarbeitung dieser Polyamide ist jedoch infolge ihrer hohen Erweichungspunkte erheblich erschwert.

Dies gilt auch für die Polyamide aus Bis-(4-aminocyclohexyl)-methan und einem Säuregemisch aus Azelainsäure und Adipinsäure, die in der US—A 4 028 476 beschrieben sind.

Niedriger schmelzende Polyamide aus Bis-(4-aminocyclohexyl)-methan und aliphatischen Dicarbonsäuren wie Adipinsäure (US—A 2 585 163) sind entweder nicht transparent oder neigen zur Nachkristallisation und damit zur Eintrübung.

In der DE—A 1 933 395 werden transparente Polyamide beschrieben, die Bis-(4-aminocyclohexyl)-methan und Hexamethylendiamin als Diaminkomponenten und Isophthalsäure und Terephthalsäure als Dicarbonsäuren in eng definierten Mischungsverhältnissen enthalten müssen.

Ein besonderer Nachteil dieser Polyamide ist, daß der Anteil des Bis-(4-aminocyclohexyl)-methan, das einen stark verbessernden Einfluß auf die Wärmeformbeständigkeit des Polyamids hat, nur maximal 50 Mol-%, d.h. maximal ca. 65 Gew.-% betragen darf. Produkte mit höherem Gehalt an Bis-(4-aminocyclohexyl)-methan haben eine zu hohe Schmelzviskosität, so daß sie nach den in der Praxis üblichen Spritzgußverfahren nicht mehr verformt werden können.

Der zwingend vorgeschriebene hohe Anteil an Hexamethylendiamin hat zur Folge, daß die Produkte eine unbefriedigende Wärmeformbeständigkeit zeigen.

In der DE—A 2 125 906 sind Copolyamide aus Bis-(4-aminocyclohexyl)-methan und 3-Äthyl-1,10-decandicarbonsäure beschrieben. Die transparenten Produkte sind zwar gut verarbeitbar, haben jedoch infolge der langen und verzweigten C-Kette der Dicarbonsäure mit nur 130°C eine unbefriedigende Wärmeformbeständigkeit. Darüber hinaus ist die unbedingt erforderliche 3-Äthyl-1,10-decandicarbonsäure nur schwer zugänglich.

Schließlich sind aus der DE—A 2 642 244 transparente Polyamide aus Bis-(4-aminocyclohexyl)-methan, Isophthalsäure und z.B. Salzen aus aliphatischen Dicarbonsäuren und aliphatischen Diaminen, bei denen je Amidgruppe die durchschnittliche Zahl der Methylengruppen mindestens 9 betragen muß, bekannt. Diese Polyamide zeigen aber offenbar wegen der langkettigen Anteile eine unzureichende Beständigkeit der Transparenz im kochenden Wasser und eine nicht ausreichende Wärmeformbeständigkeit.

Die bisher vorgeschlagenen transparenten Polyamide zeigen daher Nachteile bezüglich chemischer Beständigkeit, Erweichungstemperatur und Schmelzformbarkeit.

Überraschend wurde nun gefunden, daß Copolyamide aus Bis-(4-aminocyclohexyl)-methan und gegebenenfalls kleineren Mengen eines aliphatischen oder eines weiteren cycloaliphatischen Diamins sowie einem Gemisch aus Azelainsäure und Isophthalsäure bzw. aus Azelainsäure und Adipinsäure die genannten Nachteile nicht aufweisen, wenn der Isophthalsäure- bzw. Adipinsäure-Anteil in definierten Grenzen gewählt wird.

Die Produkte lassen sich trotz des sehr hohen Anteils an Bis-(4-aminocyclohexyl)-methan überraschenderweise ohne Schwierigkeiten zu thermoplastischen Formkörpern mit hoher Wärme-

2

formbeständigkeit, gutem Zähigkeitsniveau und guter Beständigkeit gegen Lösungsmittel verarbeiten.

Gegenstand der Erfindung sind somit transparente, thermoplastisch verformbare Copolyamide mit einer relativen Viskosität von mindestens 2,2 (gemessen in 1% iger Lösung des Polyamids in m-Kresol bei 25°C), erhalten durch Polykondensation von Bis-(4-aminocyclohexyl)-methanen und Dicarbonsäuregemischen, dadurch gekennzeichnet, daß man

1. 70 bis 100 Mol-%, vorzugsweise 80 bis 100 Mol-%, Bis-(4-aminocyclohexyl)-methane;
2. O bis 30 Mol-%, vorzugsweise O bis 20 Mol-%, Hexamethylendiamin und/oder eines von Bis-(4-aminocyclohexyl)-methan unterschiedlichen cycloaliphatischen Diamins mit $C_8$—$C_{15}$, wobei das molare Verhältnis aller cycloaliphatischen Diamine aus 1. und 2. zu Hexamethylendiamin mindestens 4:1, vorzugsweise mindestens 5:1, betragen soll, und die Summe aus 1. und 2. immer 100 Mol-% ergeben muß, und
3. äquivalenten Mengen eines Dicarbonsäuregemisches, bestehend aus: 70 bis 85 Mol-%, Azelainsäure, 30 bis 15 Mol-% Isophthalsäure oder Adipinsäure, wobei die Komponenten 3. jeweils 100 Mol-% ergeben müssen, polykondensiert.

Besonders bevorzugt sind Copolyamide, die durch Polykondensation von 85 bis 70 Mol-% Azelainsäure und 15 bis 30 Mol-% Isophthalsäure oder Adipinsäure und einer äquivalenten Menge Bis-(4-amino-cyclohexyl)-methane als alleinige Diaminkomponente erhalten werden.

Das Bis-(4-aminocyclohexyl)-methan ist ein Stereo-Isomerengemisch, bestehend überwiegend aus trans, trans-, cis-trans- und zu einem geringen Anteil an cis, cis-Isomeren. Für die Kondensation wird das bei der Hydrierung anfallende Stereo-Isomerengemisch von Bis-(4-aminocyclohexyl)-methan mit einem Schmelzpunkt oberhalb 30°C eingesetzt.

Die Herstellung der Copolyamide erfolgt nach den für die Herstellung von Polyamiden aus Diaminen und Dicarbonsäuren üblichen Verfahren. Man kann das Gemisch der Ausgangskomponenten auf Temperaturen zwischen 190 und 230°C erhitzen und in diesem Temperaturbereich vorkondensieren. Nach Beendigung dieser Vorkondensation wird bei Temperaturen zwischen 240 und 300°C zu Ende polykondensiert.

Gegen Ende der Polymerisation kann unter Vakuum kondensiert werden, dies ist jedoch keinesfalls erforderlich.

Die Vorkondensation kann mit oder ohne Zusatz von Wasser erfolgen; sie kann bei Atmosphärendruck oder in geschlossenen Autoklaven unter dem Dampfdruck des Wassers durchgeführt werden. Vorzugsweise wird in Gegenwart von 10 bis 20 Gew.-% Wasser bei geschlossenem Autoklaven vorkondensiert. Die Polykondensation ausgehend von den Salzen der Monomeren durchzuführen, ist, besonders wenn die Vorkondensation in Gegenwart von Wasser stattfindet, nicht erforderlich.

Der während der Polykondensation auftretende Verlust an Diamin wird vorzugsweise durch Einsatz eines entsprechenden Überschusses an Bis-(4-aminocyclohexyl)-methan kompensiert.

Das Molekulargewicht der Polyamide kann in bekannter Weise durch Monocarbonsäuren oder Amine geregelt werden.

Die relativ Viskosität der erfindungsgemäßen Copolyamide sollte mindestens 2.2 liegen, vorzugsweise zwischen 2, 4 und 3, 5, gemessen an einer 1% igen Lösung des Polyamids in m-Kresol bei 25°C in einem Ubbelohde-Viskosimeter.

Polyamiden gemäß der Erfindung können auch verschiedene Zusätze, die für übliche Polyamide angewendet werden, zugegeben werden, z.B. Flammschutzmittel, Hitze- und UV-Stabilisatoren, Antioxydantien und Pigmente, wobei die Zugabe während irgendeiner gewünschten Stufe vor oder nach der Polymerisation in Übereinstimmung mit bekannten Ansätzen erfolgt.

Die Polyamide gemäß der Erfindung besitzen eine ausgezeichnete Transparenz, chemische Beständigkeit, Hitzestabilität und Schmelzformbarkeit und sind als Formmasse für die Herstellung von verschiedenen gerformten und preßgeformten Gegenständen, z.B. Folien, Filmen, Platten, Rohren, Stangen und Behältern verschiedener Art wertvoll.

Beispiel 1

Man füllt 3,76 kg (20 Mol) Azelainsäure, 0,83 kg (5 Mol) Isophthalsäure und 5,25 kg (25 Mol) Bis-(4-aminocyclohexyl)-methan zusammen mit 2 l Wasser in den Autoklaven. Zur Molgewichtsstabilisierung werden 40 g Benzoesäure und zum Ausgleich während der Polykondensation auftretender Diaminverluste 50 g Bis-(4-aminocyclohexyl)-methan hinzugefügt.

Man heizt unter $N_2$-Atmosphäre auf ca. 200°C auf, wobei bei 100°C das Rührwerk eingeschaltet wird und hält das Reaktionsgemisch 4 h unter Eigendruck. Dann wird langsam entspannt, auf 270°C erhitzt und noch 7 h bei 270°C erhitzt polykondensiert.

Das entstandene fast farblose Polyamid ($\eta_{rel}$ 2,7) wird durch eine Wasserbad abgesponnen, granuliert und getrocknet.

An Normkleinstäben wird gemäß DIN 53 460 eine Wärmeformbeständigkeit nach Vicat (Methode B) von 176°C, nach DIN 53 453 eine Kerbschlagzähigkeit von 5,9 kJ/m², eine Biegefestigkeit von 110 MPa (DIN 53 452) gemessen. Die Prüfung auf Schlagzähigkeit (DIN 53 453) ergab bei 10 Proben keinen Bruch.

Beispiele 2—5

Die Versuche wurden entsprechend der in Beispiel 1 beschriebenen Verfahrensweise und in gleicher Größenordnung durchgeführt.

Die Zusammensetzung der Ausgangsmonomeren sowie einige Eingenschaften der erhaltenen Polyamide sind in Tab. 1 zusammengefaßt, wobei die Mengen der Ausgangsstoffe in Mol-% angegeben sind.

Vergleichsversuch A

Wie in Beispiel 1 beschrieben, wurde ein transparentes Copolyamid aus 1,69 kg (9 Mol) Azelainsäure, 1,49 kg (9 Mol) Isophthalsäure und 3,82 kg (18 Mol+40 g Überschuß) Bis-(4-aminocyclohexyl)-methan hergestellt.

Das erhaltene Produkt hatte eine rel. Visk. von 2,3 und eine Wärmeformbeständigkeit von 193°C. Die Verarbeitung über Spritzgußmaschinen erwies sich jedoch als so schwierig, daß das Produkt für die Praxis ungeeignet ist. Die Eigenschaften sind in der Tab. 2 zusammengefaßt.

Tabelle 1

| | Zusammensetzung der Ausgangsmonomeren (Mol-%) | | | | Eigenschaften der Polyamide | | | |
|---|---|---|---|---|---|---|---|---|
| Bsp. Nr. | Azelain-säure | Isophthal-säure | Adipin-säure | Diamin* | $\eta_{rel}$ | Vicat °C | Schlag-zähigkeit | Kerbschlag-zähigkeit (kJ/m²) |
| 1 | 80 | 20 | — | 100 | 2,8 | 176 | n.g. | 6,2 |
| 2 | 70 | 30 | — | 100 | 2,6 | 159 | n.g. | 4,2 |
| 3 | 70 | 15 | 15 | 100 | 3,0 | 150 | n.g. | 4,5 |
| 4 | 80 | — | 20 | 100 | 3,0 | 159 | n.g. | 4,4 |
| 5 | 70 | — | 30 | 100 | 3,4 | 153 | n.g. | 4,5 |

*) Bis-(4-aminocyclohexyl)-methan
n.g.=nicht gebrochen

Tabelle 2
Zusammensetzung der
Ausgangsmonomeren (Mol-%)

| Vergleichs-versuch | Azelain-säure | Isophthal-säure | Adipin-säure | Diamin x) | xx) | $\eta_{rel}$ | Bemerkungen zum Produkt |
|---|---|---|---|---|---|---|---|
| A | 50 | 50 | — | 100 | | 2,3 | nicht zu verarbeiten; Vicat=193°C |
| B | 30 | 70 | — | 100 | | 2,0 | spröde, zu hohe SV |
| C | 30 | 35 | 35 | 100 | | 2,6 | wenig transparent, zu hohe SV |
| D | 50 | — | 50 | 100 | | n.b. | hochschmelzende, niedrigvisk. |
| E | — | 20 | 80 | 100 | | n.b. | Anteile zu hohe SV |
| F | 100 | — | — | 100 | | 2,7 | nicht transparent, hohe SV |
| G | 60 | — | 40 | 80 | 20 | 3,5 | Vicat=113°C |
| H | 60 | — | 40 | 70 | 30 | 3,3 | Vicat=105°C |
| I | 100 | — | — | 80 | 20 | 2,2 | Vicat=120°C nicht transparent |

x) Bis-4-(aminocyclohexyl)-methan
xx) Hexamethylendiamin
SV Schmelzviskosität
n.b.=nicht bestimmt

Beispiel 6

Wie in Beispiel 1 beschrieben, wird aus 3,76 kg (20 Mol) Azelainsäure, 0,73 kg (5 Mol) Adipinsäure, 4,72 kg (22,5 Mol) Bis-(4-aminocyclohexyl)-methan und 0,29 kg (2,5 Mol) Hexamethylendiamin ein Polyamid hergestellt.

Das schwach gelbstichige Polyamid hatte eine rel. Viskosität von 3,0, eine Wärmeformbeständigkeit von 145°C, eine Schlagzähigkeit von 82,4 kJ/m² (8 Proben nicht gebrochen) und eine Kerbschlagzähigkeit von 4,8 kJ/m².

Vergleichsversuche B—I

Diese Versuche wurden im 100 g-Maßstab durchgeführt.

Die Ausgangsmonomeren wurden in definierten Verhältnissen (Molverhältnisse siehe Tabelle 2) eingewogen, das Reaktionsgemisch unter Stickstoffatmosphäre und Rühren langsam auf 200°C erhitzt. Im weiteren Verlauf wurde auf 270°C erhitzt und noch 6 Stunden bei 270°C polykondensiert.

Wie aus den in Tabelle 2 angegebenen Bemerkungen zu den Versuchsergebnissen hervorgeht, konnte wegen zu hoher Festpunkte von niedermolekularen Anteilen in einigen Fällen die Polykondensation nicht zu Ende durchgeführt werden.

**Patentansprüche**

1. Transparente Polyamide, erhalten durch Polykondensation von Bis-(4-aminocyclohexyl)-methanen und Dicarbonsäuregemischen, dadurch gekennzeichnet, daß man
   1. 70 bis 100 Mol-% Bis-(4-aminocyclohexyl)-methane;
   2. O bis 30 Mol-% Hexamethylendiamin und/oder eines von Bis-(4-aminocyclohexyl)-methan unterschiedlichen cycloaliphatischen Diamins mit $C_8$—$C_{15}$, wobei das molare Verhältnis aller cycloaliphatischen Diamine aus 1. oder 2. zu Hexamethylendiamin mindestens 4:1 betragen soll und die Summe aus 1. und 2. immer 100 Mol-% ergeben muß, mit
   3. äquivalenten Mengen eines Dicarbonsäuregemisches, bestehend aus 70—85 Mol-% Azelainsäure und 30 bis 15 Mol-% Isophthalsäure oder Adipinsäure, wobei die Komponenten 3 jeweils 100 Mol-% ergeben müssen, polykondensiert.
2. Polyamide nach Anspruch 1, dadurch gekennzeichnet, daß sie durch Polykondensation von 80 bis 100 Mol-%, der Komponente 1. und O bis 20 Mol-% der Komponente 2. erhalten wurden.
3. Polyamide nach Ansprüchen 1 und 2, dadurch gekennzeichnet, daß Bis-(4-amino-cyclohexyl)-methan als alleinige Diaminkomponente enthalten ist.
4. Polyamide nach Ansprüchen 1—3, dadurch gekennzeichnet, daß als Bis-(4-aminocyclohexyl)-methan ein Stereoisomerengemisch mit einem Schmelzpunkt oberhalb 30°C verwendet wird.
5. Formkörper aus Polyamiden nach Ansprüchen 1—4.

**Claims**

1. Transparent polyamides, obtained by the polycondensation of bis-(4-aminocyclohexyl)-methanes and dicarboxylic acid mixtures, characterised in that
   1. 70 to 100 mol % of bis-(4-aminocyclohexyl)-methane;
   2. 0 to 30 mol % of hexamethylene diamine and/or a $C_8$—$C_{15}$ cycloaliphatic diamine other than bis-(4-aminocyclohexyl)-methane, such that the molar ratio of all the cycloaliphatic diamines in 1. and 2. to hexamethylene diamine is at least 4:1 and the sum of 1. and 2. is invariably 100 mol %, and
   3. equivalent quantities of a dicarboxylic acid mixture, consisting of 70—85 mol % of azelaic acid and 30 to 15 mol % of isophthalic acid or adipic acid, such that the components of 3. in each case amount to 100 mol %,
   are subjected to a polycondensation reaction.
2. Polyamides according to Claim 1, characterised in that have been obtained by the polycondensation of 80 to 100 mol % of component 1. and 0 to 20 mol % of component 2.
3. Polyamides according to Claims 1 and 2, characterised in that bis-(4-aminocyclohexyl)-methane is contained therein as the only diamine component.
4. Polyamides according to Claims 1—3, characterised in that the bis-(4-aminocyclohexyl)-methane used is a stereoisomeric mixture having a melting point above 30°C.
5. Moulded articles produced from polyamides according to Claims 1—4.

**Revendications**

1. Polyamides transparents, obtenus par polycondensation de bis-(4-aminocyclohexyl)-méthanes et de mélanges d'acides dicarboxyliques, caractérisés en ce qu'on polycondense
   1. 70 à 100 moles % de bis-(4-aminocyclohexyl)-méthane;
   2. 0 à 30 moles % d'hexaméthylènediamine et/ou d'une diamine cycloaliphatique différente du bis-(4-aminocyclohexyl)-méthane, ayant 8 à 15 atomes de carbone, le rapport molaire de toutes les diamines cycloaliphatiques de 1. ou 2. à l'hexaméthylènediamine devant s'élever au moins à 4:1 et la somme de 1. et 2. devant toujours donner 100 moles %, avec
   3. des quantités équivalentes d'un mélange d'acides dicarboxyliques, formé de 70—85 moles % d'acide azélaque et de 30 à 15 moles % d'acide isophtïalique ou d'acide adipique, les composants 3 devant toujours donner 100%.
2. Polyamides suivant la revendication 1, caractérisés en ce qu'ils ont été obtenus par polycondensation de 80 à 100 moles % du composant 1 et de 0 à 20 moles % du composant 2.
3. Polyamides suivant les revendications 1 et 2, caractérisés en ce que le bis-(4-amino-cyclohexyl)-méthane est contenu comme unique composant diaminé.
4. Polyamides suivant les revendications 1 à 3, caractérisés en ce qu'un mélange de stéroisomères ayant un point de fusion au-dessus de 30°C est utilisé comme bis-(4-aminocyclohexyl)-méthane.
5. Des articles moulés en polyamides suivant les revendications 1 à 4.